# EUROPEAN PATENT SPECIFICATION

(11) **EP 0 929 800 B1**
(45) Date of publication and mention of the grant of the patent: **22.01.2003**
(21) Application number: 97941131.1
(22) Date of filing: 25.09.1997
(51) Int. Cl.: G01M 17/04

(54) **Testing a vehicle suspension system relative to a fixed reference point**
Testen einer Fahrzeugaufhängung relativ zu einem festen Referenzpunkt
Test d'un système de suspension d'un véhicule relatif à un point de référence fixe

(30) Priority: 30.09.1996 GB 9620324
(43) Date of publication of application: 21.07.1999
(73) Proprietor: Browne, Alastair, Edinburgh EH4 2TT (GB)
(72) Inventor: Browne, Alastair, Edinburgh EH4 2TT (GB)
(74) Representative: Kennedy, David Anthony
(86) International application number: GB9702616
(87) International publication number: WO98014767

(56) References cited:
- US-A- 2 934 940
- US-A- 3 690 145
- US-A- 3 720 091
- US-A- 3 937 058
- US-A- 4 774 829

## Description

This invention is in the field of vehicle suspension systems, and more particularly relates to a means for testing the wear and condition of such suspension systems.

All common road motor vehicles are equipped with some form of suspension mechanism to cushion the body/chassis from shocks due to, for example, imperfections on the road surface on which they are travelling.

Vehicle suspension systems generally consist of a spring to support the weight of the vehicle and some method of damping the oscillations of the spring. Damping is necessary to prevent the vehicle body from bouncing excessively and also to prevent the wheels from bouncing away from the road upon hitting a bump.

Over a period of time. the dampers in any given suspension system will deteriorate in their performance due to normal wear. In other circumstances, a damper may be faulty due to a manufacturing defect or the like. Deteriorating or otherwise underperforming dampers give rise to the foregoing mentioned effects, thereby causing the vehicle handling characteristics to become adversely affected.

For this reason the service or maintenance of road vehicles desirably includes frequent monitoring of the condition of the vehicle's suspension system. However, it is recognised in the present invention that no suitable or consistent apparatus or methodology is available for satisfactorily conducting such tests. In many circumstances the replacement of suspension systems, including dampers, can be recommended either unnecessarily or prematurely in consequence to unsatisfactory testing procedures or equipment. In other cases a real need for the replacement of all or part of a suspension system may be overlooked for similar reasons.

In Figure 3 of US-A-2 934 940 monitoring is clone between body 35 and wheel 37.

An object of the present invention is to obviate or at least mitigate these shortcomings by providing a means for testing the condition and performance of vehicle suspension systems. A further object of the invention described herein, although not necessarily essential to it, is to visually indicate the said condition or performance.

According to the first aspect of the invention there is provided apparatus for testing the suspension system of a vehicle, comprising:
- a platform configured to support at least one wheel of the vehicle;
- actuating means for moving the platform upward and downward while the platform is supporting at the least one wheel of the vehicle; and
- a movement detector for detecting an amount of movement of a body of the vehicle relative to a fixed reference point.

Preferably the apparatus further comprises a visual indicator which enables a visual reading of the performance of the vehicle suspension system. The actuating means may incorporate hydraulic rams or cylinders. Alternatively, mechanical or electromechanical lifts may be used. Preferably the actuating means is designed to move the platform in a vertical direction so as to simulate the vehicle hitting a bump in the road while travelling. Preferably also, the actuating means is capable of moving the platform in low frequency vertical oscillations.

The actuating means may be associated with a control panel to allow for the remote control of the actuating means by an operator.

Optionally the apparatus may further comprise a safety device wherein the safety device includes a detector means for detecting whether the vehicle is oscillating beyond predetermined limits of amplitude and a switch adapted to be triggered upon said detection by the detector means, thereby deactivating the actuation means.

The platforms may include guide means for assisting in the appropriate location of the vehicle's wheels thereon. Preferably the one or more platforms are mounted on the one or more respective actuating mechanisms such that the platforms may be generally level with a surrounding floor surface. Alternatively, the one or more platforms may be accessed via one or more respective ramp means.

Preferably a plurality of platforms may be linked together to enable the simultaneous testing of a plurality of independent or related suspension systems on a vehicle or for the testing of an axle or all four wheels on a car.

According to a second aspect of the invention there is provided a method of testing a suspension system of a vehicle comprising steps of:
- locating at least one wheel of the vehicle on a platform;
- imparting vertical movement to the platform, and in turn to the wheel, to simulate vertical irregularities in a road surface;
- measuring at least one parameter or characteristic of resultant movement of a body of the vehicle relative to a fixed reference point.

The method may comprise the step of relating said movement of the body of the vehicle to the movement of platform.

The method may further comprise the steps of detecting whether the body of the vehicle of oscillating more than a predetermined amount; and halting vertical movement of the platform if the result of the detecting step indicates that the body of the vehicle is oscillating more than the predetermined amount.

Embodiments of the invention will now be described, by way of example only, with reference to the accompanying Figures, in which:
Fig, 1 shows in elevation a schematic representation of an embodiment of the invention: and

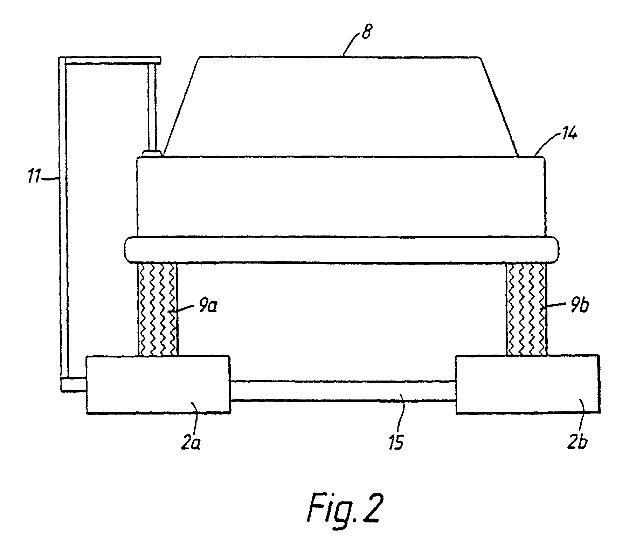

Fig.2 shows a pair of linked platforms in accordance with the invention.

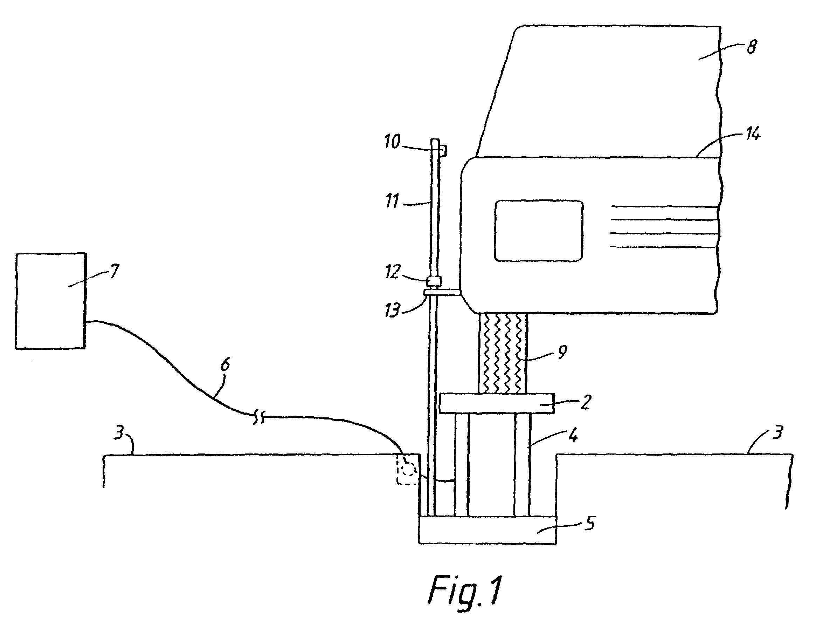

Referring firstly to Fig. 1, apparatus for testing the performance or condition of a vehicle's suspension system has a platform 2 moveable between an upper position (as shown in Fig. 1) and a lower position whereat the upper surface of the platform is substantially level with the surrounding floor 3. Movement of the platform 2 is enabled by an actuating mechanism which includes hydraulic rams 4 grounded on a fixed housing 5.

The housing 5 anchors the apparatus and typically might incorporate provision for being securely fixed to the floor. It is recognised in the invention that the apparatus will be most commonly used in garages and workshops where the floor normally comprises of a concrete slab, allowing for the use of well known anchor bolts or the like.

The hydraulic rams 4 are empowered by an hydraulic system, generally referenced 6 in the drawings; the system 6 being controlled by a remote control panel 7.

The platform 2 is designed to support the vehicle, or at least that proportion of the weight of the vehicle 8 which is transmitted through the wheel 9. Guides (not shown) may be used on the platform to appropriately locate the wheel 9 on the platform 2. In one possible embodiment the wheel 9 could be clamped to the platform 2 to ensure that the vehicle 8 at the wheel 9 does not dislodge from or at least is caused to return to its rightful position on the platform 2 during a test. Such a clamp would improve the safety of the apparatus, particularly where the platform 2 was provided in an elevated position, it being accessed by the vehicle via a ramp.

Another optional safety device is shown in Fig. 1 in the form of a sensor 10. In this particular example embodiment the sensor transmits a horizontal beam to detect whether the bonnet 14 (or other predetermined datum point) on the vehicle 8 is caused to oscillate to a particular and predetermined amplitude limit. If the sensor 10 detects the datum point on the vehicle body reaching the said limit it deactivates the actuating mechanism such that the platform and thereafter the vehicle are allowed to come to rest.
In a more sophisticated design, the actuating mechanism, when prompted by the sensor 10, could move the platform 2 in a direction to counter the oscillations of the vehicle 8, thereby causing the vehicle to come to rest more quickly.

Also, in a preferred embodiment, the safety device may be constructed such that if it is not correctly set up prior to the commencement of a test, the apparatus will not operate, that is the actuating mechanism will be deactivated. Altematively, the set up of the safety device could be automated on powering up the apparatus.

In the embodiment shown in Fig.1 the sensor 10 is mounted on a vertical post 11 which also supports a slide 12. An arm 13 is clamped to the body of the vehicle 8 and extends in a manner which causes it to interact with the slide 12 such that the slide is nudged up the post 11 by the arm 13: the arm 13 itself rising and falling in accordance with movement of the body of the vehicle 8. A scale is marked on to the support 11 to enable a reading or measurement to be taken in respect of the position of the slide 12 after a test has been completed. This arrangement allows for the maximum amplitude of oscillation to be measured and related to the input oscillations of the platform 2 caused by the actuating mechanism.

It is appreciated in the invention that far more sophisticated equipment could be used to track and monitor the movement of the body of the vehicle in relation to the platform movement. Similarly advanced and detailed software could be employed to analyse the performance of the suspension system in light of the readings obtained.

Turning now to Fig. 2, an example is given depicting a typical situation whereby two or more test platforms could be linked together and used to test either an axle pair of wheels or a complete vehicle. The vehicle 8 would be driven onto the pair of platforms 2a, 2b which are placed at a suitable distance apart, such that both wheels 9a, 9b of the same axle are supported on respective platforms. A means of linking and synchronising the two test platforms 2a. 2b is provided in the form of a mechanical link 15. The link 15 allows for the simultaneous control of both platforms 2 by the one operator and control panel.

In order to use the testing apparatus of the invention, a vehicle is positioned, typically being driven, such that one or more wheels are located on one or more respective platforms. In one example test, the actuating mechanism would then cause the one or more platforms and respective wheel or wheels to move up and down at a relatively low frequency. The frequency may be variable by the operator. In this example, the vehicle wheel would be subjected to motion which was approximately equivalent to simple harmonic motion at a frequency designed to give rise to resonance within the suspension system, should there be a fault in the damping component of the suspension system under test. Movement of the vehicle body in response to the motion of the wheel may then be analysed by visual, mechanical or electrical means.

Further tests may be designed and incorporated in order to provide a more informed analysis of the condition or performance of the suspension system. For example, the apparatus may be used to simulate the vehicle hitting a pot-hole or bump in the road. This could be performed by lowering the platform to its lowest position and then rapidly raising it to its highest position. thereby subjecting the suspension system to a step input of energy. This test may cause the tyre of the wheel to lose contact with the platform and perhaps "patter" should the suspension damper be faulty.

Once the test has been performed it may be suitable to reposition the vehicle such that an alternative wheel or wheels are located on the respective one or more platforms. This may involve driving the vehicle forward or reversing the vehicle in to the apparatus for example. The test may then be repeated.

## Claims

1. Apparatus for testing the suspension system of a vehicle, comprising:
- a platform (2) configured to support at least one wheel of the vehicle;
- actuating means (4,6,7) for moving the platform upward and downward while the platform is supporting the at least one wheel of the vehicle; and
- a movement detector (11,12,13) for detecting an amount of movement of a body of the vehicle relative to a fixed reference point.

2. Apparatus of Claim 1, further comprising means (10) for relating said movement of the body to the movement of the platform.

3. The apparatus of Claim 1 or Claim 2, wherein the apparatus is configured to assess the suspension system of the vehicle based on an output of the movement detector.

4. The apparatus of Claim 1 or Claim 2, wherein the apparatus is configured to assess the suspension system of the vehicle based on an output of the movement detector and the movement of the platform.

5. The apparatus of any of Claims 1 to 4, further comprising a safety detector for detecting whether the body of the vehicle is oscillating more than a predetermined amount.

6. The apparatus of Claim 5, wherein the actuating means is configured to halt movement of the platform when the safety detector detects that the body of the vehicle is oscillating more than a predetermined amount.

7. The apparatus of any of Claims 1 to 6, wherein the movement detector comprises a visual indicator that indicates the amount of movement of the body of the vehicle.

8. Apparatus as claimed in any preceding Claim wherein the actuating means incorporates hydraulic rams or cylinders.

9. Apparatus as claimed in any preceding Claim wherein the actuating means is designed to move the platform in a vertical direction so as to simulate the vehicle hitting a bump in a road while travelling.

10. Apparatus as claimed in any preceding Claim wherein the actuating means moves the platform in low frequency vertical oscillations.

11. Apparatus as claimed in any preceding Claim wherein the actuating means is associated with a control panel to allow the actuating means to be controlled remotely by an operator.

12. Apparatus as claimed in any preceding Claim wherein the platform includes guide means to locate the wheel of the vehicle appropriately on the platform.

13. Apparatus as claimed in any preceding Claim wherein the platform is mounted on one or more respective actuating mechanisms such that the platform is level with a surrounding floor surface.

14. Apparatus as claimed in any preceding Claim wherein the platform is accessed via one or more respective ramp means.

15. Apparatus as claimed in any preceding Claim wherein the platform enables simultaneous assessment of a plurality of independent or related suspension systems on the vehicle, or for assessment of an axle or all four wheels on a car.

16. A method of testing a suspension system of a vehicle (8) comprising the steps of:
- locating at least one wheel (9) of the vehicle on a platfrom (2);
- imparting vertical movement to the platform, and in turn to the wheel, to simulate vertical irregularities in a road surface;
- measuring at least one parameter or characteristic of resultant movement of a body of the vehicle relative to a fixed reference point (11).

17. The method according to Claim 16, further comprising the step of relating said movement of the body of the vehicle to the movement of the platform.

18. The method of Claim 16 or 17, further comprising the steps of:
- detecting whether the body of the vehicle is oscillating more than a predetermined amount;
- and halting vertical movement of the platform if the result of the detecting step indicates that the body of the vehicle is oscillating more than the predetermined amount.

## Patentansprüche

1. Vorrichtung zum Prüfen der Federung eines Fahrzeugs, umfassend:
- eine zum Tragen wenigstens eines Rads des Fahrzeugs gestaltete Plattform;
- Betätigungseinrichtung zum Bewegen der Plattform auf- und abwärts, wahrend die Plattform das wenigstens eine Rad des Fahrzeugs trägt; und
- einen Bewegungsdetektor zum Feststellen eines Betrags der Bewegung einer Karosserie des Fahrzeugs relativ zu einem festen Bezugspunkt.

2. Vorrichtung nach Anspruch 1, ferner umfassend eine Einrichtung zum Inbezugsetzen der genannten Bewegung der Karosserie mit der Bewegung der Plattform.

3. Vorrichtung nach Anspruch 1 oder Anspruch 2, bei der die Vorrichtung zur Bewertung der Federung des Fahrzeugs auf der Grundlage einer Ausgabe des Bewegungsdetektors konfiguriert ist.

4. Vorrichtung nach Anspruch 1 oder Anspruch 2, bei der die Vorrichtung zum Bewerten der Federung des Fahrzeugs auf der Grundlage einer Ausgabe des Bewegungsdetektors und der Bewegung der Plattform konfiguriert ist.

5. Vorrichtung nach einem der Ansprüche 1 bis 4, ferner umfassend einen Sicherheitsdetektor zum Feststellen, ob die Karosserie des Fahrzeugs stärker schwingt als ein vorbestimmter Wert.

6. Vorrichtung nach Anspruch 5, bei der die Betätigungseinrichtung konfiguriert ist, um die Bewegung der Plattform anzuhalten, wenn der Sicherheitsdetektor feststellt, dass die Karosserie des Fahrzeugs stärker schwingt als ein vorbestimmter Wert.

7. Vorrichtung nach einem der Ansprüche 1 bis 6, bei der der Bewegungsdetektor einen Sichtanzeiger umfasst, der den Betrag der Bewegung der Karosserie des Fahrzeugs anzeigt.

8. Vorrichtung nach einem der vorangehenden Ansprüche, bei der die Betätigungseinrichtung hydraulische Hubeinrichtungen oder -zylinder hat.

9. Vorrichtung nach einem der vorangehenden Ansprüche, bei der die Betätigungseinrichtung zum Bewegen der Plattform in einer vertikalen Richtung ausgelegt ist, um das Fahren des Fahrzeugs gegen eine Erhöhung auf einer Fahrbahn während der Fahrt zu simulieren.

10. Vorrichtung nach einem der vorangehenden Ansprüche, bei der die Betätigungseinrichtung die Plattform in vertikalen Schwingungen niedriger Frequenz bewegt.

11. Vorrichtung nach einem der vorangehenden Ansprüche, bei der die Betätigungseinrichtung mit einer Bedientafel assoziiert ist, damit die Betätigungseinrichtung von einer Bedienkraft ferngesteuert werden kann.

12. Vorrichtung nach einem der vorangehenden Ansprüche, bei der die Plattform Führungseinrichtungen zum geeigneten Positionieren des Fahrzeugrads auf der Plattform hat.

13. Vorrichtung nach einem der vorangehenden Ansprüche, bei der die Plattform auf einem oder mehreren betreffenden Betätigungsmechanismen montiert ist, sodass die Plattform auf gleicher Höhe mit einer umgebenden Bodenfläche ist.

14. Vorrichtung nach einem der vorangehenden Ansprüche, bei der der Zugang zur Plattform über eine oder mehr betreffende Rampeneinrichtungen erfolgt.

15. Vorrichtung nach einem der vorangehenden Ansprüche, bei der die Plattform gleichzeitiges Bewerten einer Mehrzahl unabhängiger oder miteinander in Beziehung stehender Federungssysteme am Fahrzeug ermöglicht, oder für die Bewertung einer Achse oder aller vier Räder eines Autos.

16. Verfahren zum Prüfen einer Federung eines Fahrzeugs, umfassend die folgenden Schritte:
- Stellen wenigstens eines Rads des Fahrzeugs auf eine Plattform;
- Übertragen einer vertikalen Bewegung auf die Plattform und somit wiederum das Rad, um vertikale Unebenheiten in einer Fahrbahnoberfläche zu simulieren;
- Messen wenigstens eines Parameters oder einer Eigenschaft resultierender Bewegungen einer Karosserie des Fahrzeugs relativ zu einem festen Bezugspunkt.

17. Verfahren nach Anspruch 16, ferner umfassend den folgenden Schritt: Inbezugsetzen der Bewegung der Karosserie des Fahrzeugs mit der Bewegung der Plattform.

18. Verfahren nach Anspruch 16 oder Anspruch 17, ferner umfassend die folgenden Schritte:
- Feststellen, ob die Karosserie des Fahrzeugs stärker schwingt als ein vorbestimmter Wert;
- und Anhalten der vertikalen Bewegung der Plattform, wenn das Ergebnis des Feststellschritts anzeigt, dass die Karosserie stärker schwingt als der vorbestimmte Wert.

## Revendications

1. Appareil pour tester le système de suspension d'un véhicule, comprenant :
- une plate-forme configurée pour supporter au moins une roue du véhicule ;
- un moyen actionneur pour déplacer la plate-forme vers le haut et vers le bas tandis que la plate-forme supporte la au moins une roue du véhicule, et
- un détecteur de déplacement pour détecter une quantité de déplacement d'une caisse du véhicule par rapport à un point de référence fixe.

2. Appareil suivant la revendication 1, comprenant en outre un moyen pour relier ledit déplacement de la caisse au déplacement de la plate-forme.

3. Appareil suivant la revendication 1 ou 2, dans lequel l'appareil est configuré pour évaluer le système de suspension du véhicule sur la base d'une sortie du détecteur de déplacement.

4. Appareil suivant la revendication 1 ou 2, dans lequel l'appareil est configuré pour évaluer le système de suspension du véhicule sur la base d'une sortie du détecteur de déplacement et du déplacement de la plate-forme.

5. Appareil suivant l'une quelconque des un revendications 1 à 4, comprenant en outre un détecteur de sécurité pour détecter si la caisse du véhicule oscille de plus d'une quantité prédéterminée.

6. Appareil suivant la revendication 5, dans lequel le moyen actionneur est configuré pour arrêter le déplacement de la plate-forme lorsque le détecteur de sécurité détecte que la caisse du véhicule oscille de plus d'une quantité prédéterminée.

7. Appareil suivant l'une quelconque des revendications 1 à 6, dans lequel le détecteur de déplacement comprend un indicateur visual qui indique la quantité de déplacement de la caisse du véhicule.

8. Appareil suivant l'une quelconque des revendications précédentes, dans lequel le moyen actionneur comprend des cylindres ou des pistons hydrauliques.

9. Appareil suivant l'une quelconque des revendications précédentes, dans lequel le moyen actionneur est propre à déplacer la plate-forme dans un sens vertical de manière à simuler le passage sur une bosse sur une route du véhicule en circulation.

10. Appareil suivant l'une quelconque des revendications précédentes, dans lequel le moyen actionneur déplace la plate-forme par des oscillations verticales de faible fréquence.

11. Appareil suivant l'une quelconque des revendications précédentes, dans lequel le moyen actionneur est associé à un tableau de commande pour permettre que le moyen actionneur soit commandé à distance par un opérateur.

12. Appareil suivant l'une quelconque des revendications précédentes, dans lequel la plate-forme comprend un moyen de guidage pour placer de manière appropriée la roue du véhicule sur la plate-forme.

13. Appareil suivant l'une quelconque des revendications précédentes, dans lequel la plate-forme est montée sur un ou plusieurs mécanismes actionneurs respectifs de sorte que la plate-forme est au même niveau qu'une surface de sol périphérique.

14. Appareil suivant l'une quelconque des revendications précédentes, dans lequel la plate-forme est accessible par le biais d'un ou plusieurs moyens de rampe respectifs.

15. Appareil suivant l'une quelconque des revendications précédentes, dans lequel la plate-forme permet une évaluation simultanée d'une pluralité de systèmes de suspension indépendants ou connexes sur le véhicule, ou l'évaluation d'un essieu ou des quatre roues d'une voiture.

16. Procédé pour tester un système de suspension d'un véhicule comprenant les étapes visant à :
- placer au moins une roue du véhicule sur une plate-forme ;
- imprimer un déplacement vertical à la plate-forme, et à son tour à la roue, pour simuler des irrégularités verticales dans la surface d'une route, et
- mesurer au moins un paramètre ou une caractéristique du déplacement obtenu d'une caisse du véhicule par rapport à un point de référence fixe.

17. Procédé suivant la revendication 16, comprenant en outre l'étape visant à relier ledit déplacement de la caisse du véhicule au déplacement de la plate-forme.

18. Procédé suivant la revendication 16 ou 17, comprenant en outre les étapes visant à :
- détecter si la caisse du véhicule oscille de plus d'une quantité prédéterminée, et
- arrêter le déplacement vertical de la plate-forme si le résultat de l'étape de détection indique que la caisse du véhicule oscille de plus de la quantité prédéterminée.
